# EUROPÄISCHE PATENTANMELDUNG

(11) **EP 0 949 767 A2**
(43) Veröffentlichungstag der Anmeldung: **13.10.1999**
(21) Anmeldenummer: 99440061.2
(22) Anmeldetag: 22.03.1999
(51) Int. Cl.: H04B 3/23

(54) **Vielkanal-Echocanceller mit Compander**

(30) Priorität: 09.04.1998 DE 19815942
(71) Anmelder: ALCATEL, 75008 Paris (FR)
(72) Erfinder: Weinschenk, Fritz, 73773 Aichwald (DE); Mann, Armin, 70197 Stuttgart (DE); Walker, Michael, 73666 Baltmannsweiler 2 (DE); Matt, Hans Jürgen, Dr., 71686 Remseck (DE); Söhnle, Holger, 71299 Winsheim (DE)
(74) Vertreter: Müller, Joachim, Dipl.-Ing.

(57) **Zusammenfassung**

Eine Compander-Schaltung (20) zur Echounterdrückung in TK-Einrichtungen mit einer Estimator-Schaltung (21) zum Abschätzen einer Echokopplung eines Leitungsechos und seiner Verzögerungszeit, sowie mit einer Kennlinien-Schaltung (23) mit einem Multiplizierglied (24) zur Steuerung des kurzzeitigen Ausgangssignals von zₒᵤₜ in Abhängigkeit vom kurzzeitigen Eingangssignal von zᵢₙ, zeichnet sich dadurch aus, daß an allen Ein- und Ausgängen der Compander-Schaltung eine Vielzahl von N TK-Kanälen mit N-facher Taktgeschwindigkeit gegenüber einem einzelnen TK-Kanal anliegt bzw. ausgegeben wird; daß sämtliche Speichereinheiten als Multiplexer-Zwischenspeicher-Demultiplexer (MZD)-Einheiten (30) ausgeführt sind; und daß ein modulo-N-Zähler (26) vorgesehen ist, der an allen Ein- und Ausgängen alle MZD-Einheiten so ansteuert, daß in jeder MZD-Einheit immer die gleiche, einem bestimmten TK-Kanal zugeordnete Speicherzelle (35₁, 35₂, ... 35_{N}) adressiert wird. Dadurch können mit einem einzigen Compander eine Vielzahl von Kanälen, vorzugsweise über 2000, gleichzeitig bearbeitet werden, wobei lediglich ein sehr geringer technischer Aufwand zur Modifikation der Compander-Schaltung erforderlich ist.

## Beschreibung

Die Erfindung betrifft eine Compander-Schaltung zur Echounterdrückung in Telekommunikations (TK)-Einrichtungen, wie Endgeräten, Übertragungssystemen oder Vermittlungseinrichtungen, mit einem Eingang x₁',an dem ein von einem nahen TK-Teilnehmer 1 zu einem fernen TK-Teilnehmer 2 ausgesendetes Sendesignal anliegt, einem Eingang x₂', an dem ein vom fernen TK-Teilnehmer 2 kommendes Empfangssignal zᵢₙ(k) sowie ein ggf. aus mehreren Teilechos bestehendes fernes Echo anliegt, und einem Ausgang y₁', an dem das in der CompanderSchaltung bearbeitete Empfangssignal zₒᵤₜ(k) zum nahen TK-Teilnehmer 1 weitergereicht wird, mit einer Estimator-Schaltung zum Abschätzen einer Echokopplung eines Leitungsechos und seiner Verzögerungszeit, sowie mit einer Kennlinien-Schaltung mit einem Multiplizierglied zur Steuerung des kurzzeitigen Ausgangssignals von zₒᵤₜ(k) in Abhängigkeit vom kurzzeitigen Eingangssignal von zᵢₙ(k).

Eine derartige Compander-Schaltung ist beispielsweise bekannt aus der DE-A-37 24 346.

Bei der Übertragung von Sprachsignalen auf Telekommunikationsleitungen können einerseits z.B. am "nahen Ende" bei dem aussendenden Benutzer akustische Echos aufgrund der direkten Schallübertragung vom Lautsprecher zum Mikrofon des Endgerätes entstehen. Insbesondere bei mehreren räumlich benachbart angeordneten Endgeräten, beispielsweise in einem Büro- oder Konferenzraum mit vielen Telefonanschlüssen, verschärft sich das Nahecho-Problem erheblich, da eine akustische Kopplung von jedem Lautsprecher auf jedes Mikrofon erfolgt. Ein in der EP-A-0 627 825 vorgeschlagenes Vielkanal-Echo-Unterdrückungsverfahren und die zugehörige elektronische Schaltung sollen hier Abhilfe schaffen.

Neben dem nahen akustischen Echo entsteht aber auch ein ggf. aus unterschiedlich vielen Teilechos zusammengesetztes elektrisches Leitungsecho aufgrund von Reflexionen der ausgesendeten Sprachsignale an unterschiedlich entfernten Stellen im Übertragungskanal, beispielsweise bei Gabelschaltungen, sogenannten 2-4-Drahthybriden, im Endgerät und/oder in Vermittlungsstellen und/oder an Netzübergängen zwischen analogen und digitalen Netzen. Dabei werden üblicherweise sogenannte "Nahbereich-Echos", die in einem Zeitraum bis zu 128 ms zum Sprecher reflektiert werden, unterschieden von sogenannten "Fern-Echos", die in einem Zeitrahmen bis 640 ms an den Sprecher zurückkommen. Aufgrund des Zeitversatzes wirken Echos besonders störend, da der Sprecher unterdessen in seiner Rede merklich fortgefahren ist, wenn sein eigenes reflektiertes Sprachsignal wieder bei ihm ankommt. Verzögerte Fernechos treten beispielsweise bei interkontinentalen, über Tiefseekabel oder Satelliten übertragenen, Ferngespräche auf. Die Netzbetreiber, die entsprechende Fernsprechnetze unterhalten, sind daher bestrebt, alle Arten von Echos, insbesondere die Fernechos mit großem Zeitversatz, aber auch die mit ggf. höherer Intensität reflektierten Nahechos möglichst effektiv zu unterdrücken.

Dazu wird beispielsweise in der EP-A-0 792 029 eine Echounterdrückungseinrichtung mit adaptivem Filter vorgeschlagen, die einen groben und einen feinen Detektor für Nahend-Sprachsignale umfaßt, welche beidseits der Echounterdrückungseinrichtung angeordnet sind und somit das ankommende Signal vor und nach der Echounterdrückung beobachten können. In Sprachpausen vom nahen Ende soll damit eine Anpassung an reflektierte Echowerte vorgenommen werden.

In der DE-A-44 30 189 wird ein kostengünstiges Verfahren vorgeschlagen, das bei unterschiedlichen akustischen Bedingungen einsetzbar ist, und bei dem ein FIR (Finite Impulse Response)-Filter eingesetzt wird, dessen Filterkoeffizienten nach dem NLMS (Normalized Least Mean-Square)-Algorithmus bestimmt werden. Zur Echounterdrückung in einem TK-Netz mit einer Vielzahl von parallelen Kanälen wird nach dieser Methode für jeden Kanal ein derartiger Echounterdrücker mit adaptivem FIR-Filter eingesetzt, der auf einem digitalen Signalprozessor in Software realisiert ist. Das adaptive FIR-Filter soll dabei das zu erwartende, möglicherweise aus mehreren Einzelechos bestehende Gesamtecho nachbilden und von dem an das TK-Endgerät übertragenen, mit dem Echo behafteten Nutzsignal abziehen.

In der US-A 5 148 426 ist eine Echounterdrückungsanordnung gezeigt, bei der ein PCM-Multiplexer sowie Netzwerküberwachungsfunktionen in einem Gehäuse mit der Echounterdrückungseinrichtung integriert sind, um den Verdrahtungs- und Verschaltungsaufwand und damit die Fehlerhäufigkeit zu verringern. Die technische Realisierung einer einzigen Echounterdrückungseinrichtung, die eine Vielzahl von Telekommunikationskanälen gleichzeitig bedienen kann, wird jedoch nicht aufgezeigt. Vielmehr werden lediglich die räumlich getrennten Funktionen, insbesondere Zusatzfunktionen zu den klassischen Performance-Monitor-Funktionen zusammen mit dem Echo-Canceller in einer Baueinheit zusammengelegt. Die eigentliche Echounterdrückungseinheit behandelt jeweils nur einzelne Kanäle durch Messungen des Signal-Rausch-Abstandes, des Signalpegels und des Echopegels eines jeden Kanals. Auf diese Weise wird die Qualität der Einzelkanäle, die Funktion eines DS1 -Multiplex-Levels (24 Kanäle á 64 kbit/s) sowie eines DS3-Multiplex-Levels (28 mal 24 Kanäle) in einem Gerät in bidirektionaler Ausführung überwacht.

Die US-A 4 467 146 beschreibt ein Echounterdrückungssystem, welches wiederum mit einem digitalen Transversalfilter das ferne Leitungsecho nachbildet und vom eingehenden Nutzsignal abzieht. Die vorgeschlagene Anordnung soll die Echounterdrückung für digitale PCM-Multiplex-Übertragungssysteme verbessern, bei denen Sprachabtastwerte mit einer quasi-logarithmischen Kennlinie bewertet werden. Da die bekannten digitalen Echokompensatoren mit gleichförmig quantisierten Übertragungsfunktionen arbeiten, müssen die mit ungleichförmigen Kennlinien gebildeten Abtastwerte (A-law oder *µ*-law) zunächst in gleichförmig quantisierte Abtastwerte zurückverwandelt werden. Dabei entstehen Fehler, weil am vermittlungsseitigen Analog-Digital-Wandler das Summensignal ungleichförmig quantisiert wurde. Die Fehler der ungleichförmigen Quantisierung sollen gemäß US-A 4 467 146 beseitigt werden.

Neben dem oben beschriebenen Verfahren der Ausfilterung nachgebildeter Echosignale ist eine weitere, technisch einfacher zu realisierendere Methode der Echounterdrückung bekannt, nämlich das sogenannte "Compander-Prinzip". Dabei wird in einer Estimatorschaltung die Echokopplung eines Leitungsechos sowie seine Verzögerungszeit abgeschätzt und bei einer Absenkung des kurzzeitigen Empfangspegels während der Sprachpausen mittels einer Kennlinien-Schaltung der Ausgangspegel derart abgesenkt, daß das ankommende Leitungsecho und eventuelle Hintergrundgeräusche effektiv unterdrückt werden. Es erfolgt dabei kein genereller Echoabzug vom ankommenden Nutzsignal im Empfangspfad, sondern lediglich eine "Maskierung" des Echos in den Sprachpausen durch Absenkung des kurzzeitigen Ausgangspegels. Während einer der beiden Teilnehmer spricht, also bei Vorliegen eines hohen Eingangspegels, wird der Ausgangspegel durch Verschiebung in der Kennlinien-Schaltung im oberen Bereich gehalten, da dann das wesentlich schwächere Echo unter dem hohen Pegel des Sprachsignals "versteckt" ist und sich nicht störend auswirkt. Dieses Compander-Prinzip ist beispielsweise in der eingangs zitierten DE-A-37 24 346 beschrieben.

Die bekannen Echo-Canceller Systeme mit Compander eignen sich jedoch derzeit nur für die Bedienung einzelner Übertragungskanäle mit einer Echounterdrückungsfunktion. Aufgabe der vorliegenden Erfindung ist es demgegenüber, eine Compander-Schaltung zur Echounterdrückung der eingangs beschriebenen Art dahingehend zu verbessern, daß mit einer einzigen Companderschaltung eine Vielzahl von Kanälen, vorzugsweise über 2000 Kanäle, gleichzeitig bearbeitet werden können, wobei ein möglichst geringer technischer Aufwand zur Modifikation der Compander-Schaltung erforderlich sein soll.

Erfindungsgemäß wird diese Aufgabe dadurch gelöst, daß an allen Ein- und Ausgängen der Compander-Schaltung eine Vielzahl von N TK-Kanälen mit Nfacher Taktgeschwindigkeit gegenüber einem einzelnen TK-Kanal anliegt bzw. ausgegeben wird; daß sämtliche Speichereinheiten innerhalb der Compander-Schaltung als "Multiplexer-Zwischenspeicher-Demultiplexer" (MZD)-Einheiten ausgeführt sind; und daß ein modulo-N-Zähler vorgesehen ist, der an allen Ein- und Ausgängen der Compander-Schaltung alle MZD-Einheiten so ansteuert, daß in jeder MZD-Einheit immer die gleiche, einem bestimmten TK-Kanal zugeordnete Speicherzelle adressiert wird.

Die derart gegenüber einer Einzelkanal-Companderschaltung erweiterte erfindungsgemäße Companderschaltung wird entsprechend der Anzahl N der gleichzeitig bedienten TK-Kanäle mit N-fachem Takt gegenüber einer Einzelkanal-Schaltung betrieben. Der Modulo-N-Zähler steuert alle MZD-Einheiten synchron über einen Adressbus an, so daß in jeder MZD-Einheit immer die gleiche, zu einem bestimmten Kanal gehörende Speichereinheit adressiert wird. Damit können auf technisch sehr unaufwendige Weise bei einer heutzutage unproblematischen Taktrate von beispielsweise 16 MHz gleichzeitig ca. 2000 TK-Kanäle mit einer Echounterdrückung in einer einzigen kompakten Compander-Schaltung bedient werden.

Bei einer besonders kompakten Ausführungsform ist die erfindungsgemäße Compander-Schaltung auf einem ASIC (Application Specific Integrated Circuit) implementiert. Durch die hohe Integrationsdichte eines ASIC kann trotz gleichzeitiger Bedienung einer großer Anzahl von TK-Kanälen mit einer Echounterdrückungsfunktion die Baugröße der Schaltungsanordnung relativ klein gehalten werden.

Bei einer besonders bevorzugten Weiterbildung dieser Ausführungsform sind die MZD-Einheiten auf einer externen, vom ASIC getrennten Speichereinheit, vorzugsweise einem RAM (Random Access Memory) realisiert. Dadurch kann die für das ASIC erforderliche Chipfläche und damit die Gestehungskosten des ASIC minimal gehalten werden. Besonders preiswert ist die Ausführung auf einem Standard RAM, wie es im Handel erhältlich ist. Besonders bevorzugt ist weiterhin eine Ausführungsform, bei der ein digitaler Signalprozessor (DSP) vorgesehen ist, der nach Bedarf in der Kennlinien-Schaltung auf dem ASIC verschiedene Kennlinientypen ein- oder ausschalten kann um individuelle Kundenwünsche zu berücksichtigen. Damit können beispielsweise für eine pegelgetreue Signalwiedergabe Kennlinien mit 45°-Anstieg und für eine Signalregenerierung horizontale Kennlinienabschnitte eingesetzt werden, vgl. beispielsweise DE 196 115 48.

Besonders vorteilhaft ist auch eine Ausführungsform der erfindungsgemäßen Compander-Schaltung, bei der zusätzlich eine Schaltung mit adaptiven FIR-Filtern, die das Gesamtecho nach bilden und von dem an die jeweilige TK-Einrichtung übertragenen Nutzsignal abziehen können, vorgesehen ist. Die Echounterdrückung wird durch die Ausfilterung auftretender Leitungsechos zusätzlich zu deren Maskierung noch effektiver und damit der Komfort beim Endteilnehmer weiter verbessert.

Bei einer vorteilhaften Weiterbildung sind die adaptiven FIR-Filter ebenfalls auf einem ASIC, vorzugsweise auf dem gleichen ASIC wie die Compander-Schaltung, implementiert. Die für die Vielkanalecho-Unterdrückung erforderlichen Hardware-Einheiten sind dann besonders kompakt und preiswert in ihrer Herstellung.

Alternativ können die adaptiven FIR-Filter durch ein Computerprogramm realisiert sein, das die nachzubildenden Echos in Echtzeit berechnen und vom Nutzsignal auf dem jeweiligen TK-Kanal abziehen kann. Ebenso kann auch die Compander-Schaltung selbst als Computerprogramm realisiert sein. Dadurch wird einerseits die Hardware für die erfindungsgemäße Echounterdrückungseinrichtung auf ein Minimum reduziert, andererseits können durch Modifizierung bzw. Austausch des Computerprogramms in einfacher Weise Systemänderungen durchgeführt werden.

Bei einer weiteren bevorzugten Ausführungsform der erfindungsgemäßen Compander-Schaltung ist zusätzlich eine Einrichtung zur Erkennung von Nicht-Sprachsignalen auf einem TK-Kanal, insbesondere zur Detektion von Modem-oder Faxsignalen vorgesehen. Dadurch kann die Echounterdrückungsfunktion automatisch bei Vorliegen von Nicht-Sprachsignalen ausgeschaltet werden, was die Verbindungssicherheit von Fax- oder Modemverbindungen erhöht, da Modems häufig über eigene Echoentzerrer (mit quantischer Rückführung) verfügen.

Vorteilhaft ist eine Weiterbildung dieser Ausführungsform, bei der sämtliche Speichereinheiten der Einrichtung zur Erkennung von Nicht-Sprachsignalen ebenfalls als MZD-Einheiten ausgeführt sind. Auf diese Weise kann die Gesamtschaltung aus standardisierten Untergruppen aufgebaut werden, was die Herstellungskosten beträchtlich senkt.

Vorteilhafterweise ist auf der Einrichtung zur Erkennung von Nicht-Sprachsignalen eine diskrete Fourier-Transformation (DFT), oder ein Goertzel-Algorithmus implementiert. Da der Goertzel-Algorithmus einen äußerst geringen Bedarf an Speicherplatz und Rechenkapazität aufweist, kann gemäß der vorliegenden Erfindung durch Einsatz von MZD-Einheiten die Zusatzfunktion der Erkennung von Nicht-Sprachsignalen besonders aufwandsarm realisiert werden.

Bei einer weiteren vorteilhaften Ausführungsform schließlich enthalten die N-Speicherzellen des Speicherelements einer MZD-Einheit ein Master-Slave-Flipflop zur Zwischenspeicherung eines binären Werts. Dadurch wird in einem einzigen Taktzyklus gleichzeitiges Auslesen und Beschreiben der Speicherzellen ermöglicht.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
Fig. 1 in der oberen Hälfte den zeitlichen Verlauf einer typischen Nahbereichs-Echosequenz mit zwei Teilechos und in der unteren Hälfte eine Fern-Echosequenz mit drei Teilechos;
Fig. 2 eine Compander-Schaltung nach dem Stand der Technik zur Echounterdrückung eines einzelnen TK-Kanals bestehend aus einer Estimator-Schaltung, einer Kennlinien-Schaltung und einem Multiplizierer;
Fig. 3 eine schematische Darstellung der erfindungsgemäßen Vielkanal-Compander-Schaltung mit angedeuteten x₁- und x₂-Abtastwerten sowie einem typischen Compander-Kennlinienverlauf;
Fig. 4a eine Speicherzelle in der Einzelkanal-Compander-Schaltung; und
Fig. 4b eine schematische Darstellung des Aufbaus einer MZD-Einheit.

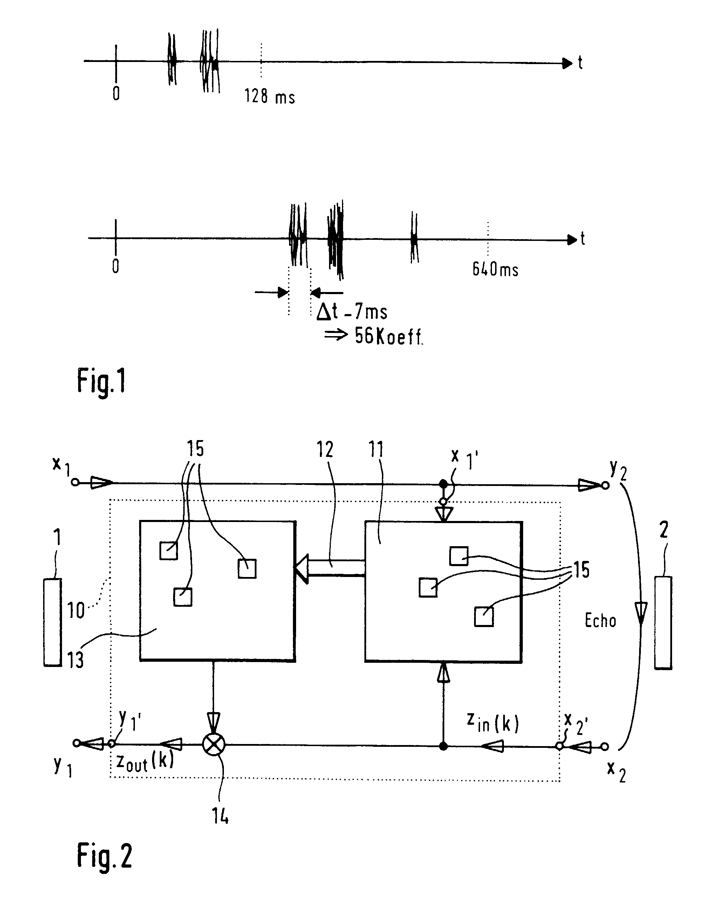

Im oberen Teil von Fig. 1 ist der zeitliche Verlauf einer Folge von Nahbereich-Teilechos dargestellt, die definitionsgemäß eine Verzögerungszeit von bis zu 128 ms gegenüber dem Zeitpunkt des Aussendens des Signals vom entsprechenden TK-Teilnehmer aufweisen. Derartige Leitungsechos kommen beispielsweise an Vermittlungsstellen, Netzhybriden und anderen Arten von Knotenstellen im Netz durch Reflexion zustande, wirken aber dann nicht störend, wenn noch keine merkliche Verzögerungszeit (Größenordnung 10 ms) seit dem Aussenden des Ursprungssignals vergangen ist, weil ein Sprecher an einem TK-Endgerät einen gewissen Echoeffekt auch durch akustische Echos im Raum um ihn herum bzw. seinen eigenen Körperschall im Kopf aufnimmt und quasi automatisch "kompensiert", da er daran gewöhnt ist.

Sehr problematisch werden die Leitungsechos allerdings immer dann, wenn größere Verzögerungszeiten ab 30 ms auftreten, was in Fig. 1 dargestellt ist. Derartige Fern-Echos mit Zeitverzögerungen in der Größenordnung bis 640 ms können beispielsweise bei kontinentalen Ferngesprächen oder bei Interkontinentalverbindungen auftreten. Allein die Verzögerung bei einer Satellitenübertragung eines Signals von einem Kontinent zum anderen beträgt in der Regel ca. 250 ms. Zum Zeitpunkt des Empfangs eines solchen fernen Echos durch den ursprünglichen Absender ist der letztere in seiner Rede schon merklich fortgeschritten, so daß der Echoeffekt besonders störend wirkt. Ähnlich starke Zeitverzögerungen können auftreten, wenn ein Sprachsignal eine starke Kompression und Dekompression durchläuft, oder wenn es parallel zu einer komprimierten Bildübertragung verzögert werden muß, um Lippensynchronität beizubehalten.

Eine Compander-Schaltung zur Maskierung derartiger Leitungsechos, die in Sprachpausen beim aussendenden Teilnehmer einlaufen, ist für den Einzelkanalbetrieb bereits bekannt. Fig. 2 zeigt schematisch eine solche Einzelkanal-Compander-Schaltung 10 nach dem Stand der Technik. Auf einem Sendepfad x₁-> y₂ liegt ein von einem nahen TK-Teilnehmer 1 zu einem fernen TK-Teilnehmer 2 ausgesendetes Sendesignal an, von dem im Übertragungssystem reflektierte, möglicherweise aus mehreren Teilechos bestehende ferne Echos in einem Empfangspfad x₂ -> y₁ zum nahen TK-Teilnehmer 1 zurückgelangen können. Um diese zu unterdrücken, wird an einem Eingang x₁^{,} das Sendesignal zum Sendepfad x₁→ y₂ abgegriffen und einer Estimator-Schaltung 11 zugeführt, die andererseits über einen weiteren Eingang x₂^{,} das vom fernen TK-Teilnehmer 2 über den Empfangspfad X₂ → y₁ kommende Empfangssignal zᵢₙ (k), welches mit Echos belastet sein kann, eingespeist bekommt.

In der Estimator-Schaltung 11 werden Echokopplung und Verzögerungszeiten sowie Empfangspegel und Hintergrundgeräusche berechnet und über einen Steuersignalpfad 12 entsprechende Anweisungen an eine Kennlinienschaltung 13 weitergereicht, die eine entsprechende Kennlinie bereitstellt und damit über ein Multiplizierglied 14 den kurzzeitigen Ausgangssignal zₒᵤₜ (k), in Abhängkeit vom kurzzeitigen Eingangssignal zᵢₙ (k), des echobelasteten Nutzsignals auf dem Empfangspfad x₂ -> y₁ derart steuert, daß in Sprachpausen des fernen Sprechers der Signalpegel gesenkt und während der Sprechzeiten angehoben wird, um eventuelle Echos auf dem Nutzsignal während der Sprachpausen, wo sie vom nahen TK-Teilnehmer 1 wahrgenommen werden könnten, zu unterdrücken. Das entsprechend behandelte Ausgangssignal wird dann an einem Ausgang y₁'an den nahen TK-Teilnehmer 1 weitergereicht.

Zur Erfüllung der oben genannten Aufgabe umfaßt die Estimator-Schaltung 11 sowie auch die Kennlinien-Schaltung 13 eine Vielzahl von Speicherzellen 15, die zwar im Einzelnen unterschiedliche Funktionen erfüllen, aber in der Regel gleich aufgebaut sind und daher mit einer pauschalen Bezugsziffer in Fig. 2 versehen sind. Eine solche Speicherzelle für einen einzelnen Abtastwert ist auch in Fig. 4a nochmals schematisch dargestellt. Eine derartige Speicherzelle speichert einen Abtastwert mit z.B. 16 bit.

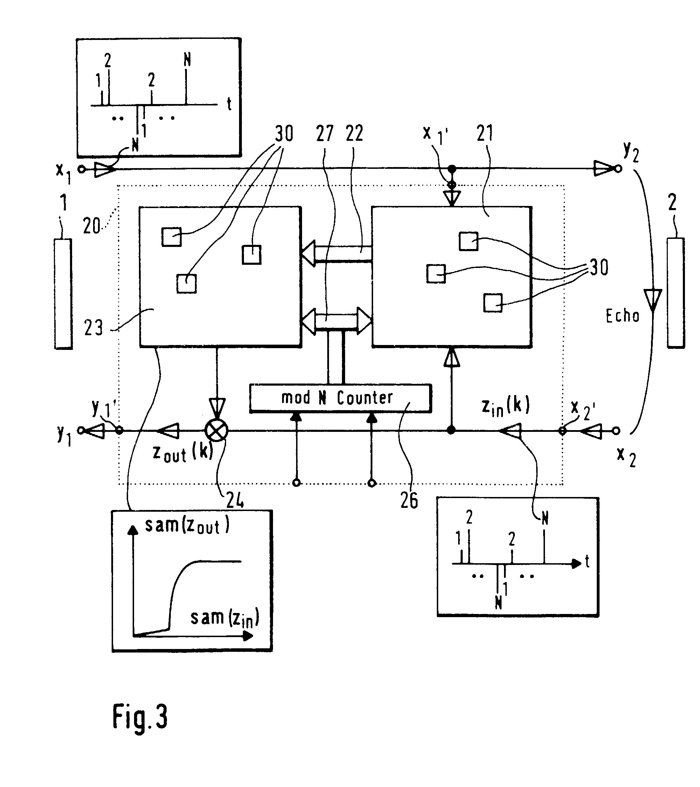

Eine schematische Darstellung der erfindungsgemäßen Compander-Schaltung 20 für die gleichzeitige Bedienung von N TK-Kanälen mit einer Echounterdrückungsfunktion ist in Fig. 3 gezeigt. Auf dem Sendepfad x₁ -> y₂ liegt nun eine Vielzahl von Signalen der Kanäle 1 bis N an, was in Fig. 3 im Kästchen oben links als zeitlicher Verlauf der unterschiedlichen Abtastwerte der Signale der N TK-Kanälen dargestellt ist. Diese Abtastwerte werden gegenüber der in Fig. 2 dargestellten bekannten Einzelkanal-Companderschaltung 10 nunmehr mit N-facher Taktgeschwindigkeit über den Eingang x₁'eingegeben. Das gleiche gilt auch für den Empfangspfad x₂ -> y_{1,} wo ebenfalls mit Nfacher Geschwindigkeit gegenüber einer Einzelkanal-Compander-Schaltung 10 die entsprechend in einem weiteren Kästchen in Fig. 3 unten rechts schematisch dargestellten Abtastwerte der Empfangssignale aus den eingehenden Nutzkanälen in den Eingang x₂^{'} eingegeben werden.

Über die Eingänge x₁' und y₂' wird die Estimator-Schaltung 21 Nfach getaktet mit den entsprechenden Abtastwerten versorgt, aus denen sie wiederum die Echokopplungen und Verzögerungszeiten abschätzt und entsprechende Steuersignale über die Steuerleitung 22 an die Kennlinien-Schaltung 23 weitergibt. Diese wiederum stellt die entsprechenden Kennlinien zur Verfügung, welche dem Multiplizierglied 24 eingegeben werden, um das kurzzeitige Ausgangssignal zₒᵤₜ (k) des Nutzsignals auf dem k-ten TK-Kanal in Abhängigkeit vom kurzzeitigen Eingangssignal zᵢₙ (k) zum Zwecke der Echounterdrückung steuert.

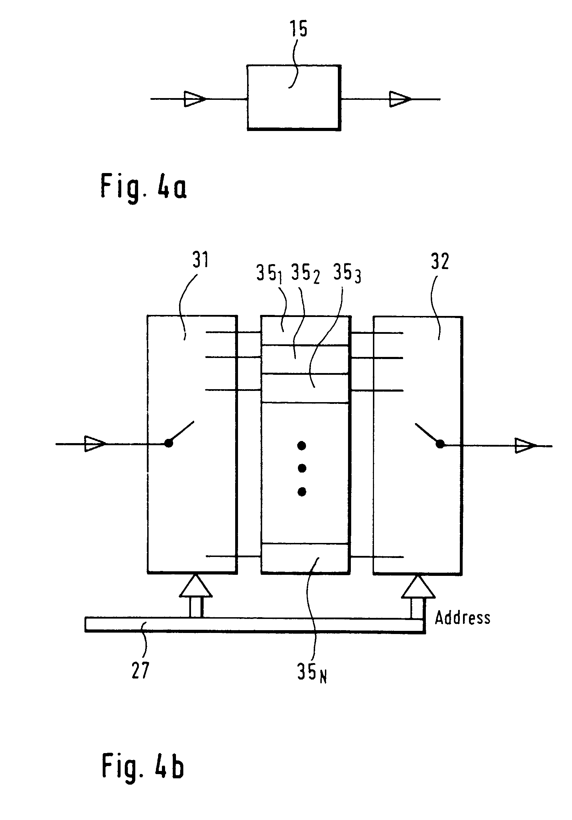

Sämtliche Speichereinheiten innerhalb der erfindungsgemäßen Compander-Schaltung 20 sind nunmehr als Mulitplexer-Zwischenspeicher-Demultiplexer (MZD)-Einheiten 30 ausgeführt, die wiederum pauschal mit gleichen Bezugsziffern bezeichnet sind und anhand von Fig. 4b näher erläutert werden. Weiterhin ist in der Vielkanal-Compander-Schaltung 20 ein modulo-N-Zähler 26 vorgesehen, der über einen Adressbus 27 die MZD-Einheiten 30 in der Estimator-Schaltung 21 und in der Kennlinien-Schaltung 23 so ansteuert, daß in jeder MZD-Einheit 30 immer die gleiche, einem bestimmten, im gezeigten Beispiel dem k-ten, TK-Kanal zugeordnete Speicherzelle adressiert wird.

Links unten in Fig. 3 ist schematisch eine typische Compander-Kennlinie gezeigt, mit der das kurzzeitige Ausgangssignal zₒᵤₜ (k) in Abhängigkeit vom kurzzeitigen Eingangssignal zᵢₙ (k) gesteuert wird. Die entsprechend behandelten Signale der N TK-Kanäle werden mit Nfacher Taktgeschwindigkeit gegenüber der Einzelkanal-Compander-Schaltung 10 am Ausgang y₁' der erfindungsgemäßen Vielkanal-Compander-Schaltung 20 auf den Empfangspfad zu einer Vielzahl naher TK-Teilnehmer 1 ausgegeben.

Fig. 4b zeigt schematisch den Aufbau einer über den Adressbus 27 vom modulo-N-Zähler 26 angesteuerten MZD-Einheit 30. Entsprechend der Anzahl N von TK-Kanälen sind N Speicherzellen 35₁, 35₂, ... 35_{N} vorgesehen, die je einen Abtastwert speichern und die über einen Multiplexer 31 angesteuert und deren Inhalt über einen Demultiplexer 32 weitergeleitet wird. Die Speicherzellen können als Basiselemente insbesondere sogenannte Master-Slave-Flipflops zur Zwischenspeicherung eines binären Wertes enthalten.

Insgesamt kann die erfindungsgemäße Compander-Schaltung 20 auf einem ASIC implementiert sein. Die MZD-Einheiten können bei in der Zeichnung nicht dargestellten Ausführungsformen auch auf einer externen, von ASIC getrennten Speichereinheit, vorzugsweise einem RAM realisiert sein. Außerdem kann ein in der Zeichnung ebenfalls nicht dargestellter digitaler Signalprozessor vorgesehen sein, der nach Bedarf in der Kennlinien-Schaltung 23 auf dem ASIC verschiedene Kennlinientypen ein- oder ausschalten kann und der die Verzögerungszeiten der Echos in jedem Kanal ermittelt und diese Werte der Estimator-Schaltung 21 zuleitet.

Weiterhin kann bei in der Zeichnung nicht dargestellten Ausführungsformen zusätzlich eine Schaltung mit adaptiven FIR-Filtern, die das Gesamtecho nachbilden und von dem an die jeweilige TK-Einrichtung übertragenen Nutzsignal abziehen, vorgesehen sein. Insbesondere können die adaptiven FIR-Filter auf dem gleichen ASIC wie die Compander-Schaltung implementiert sein.

Bei weiteren in der Zeichnung nicht dargestellten Ausführungsformen kann zusätzlich auch eine Einrichtung zur Erkennung von Nicht-Sprachsignalen auf einem der zu bedienenden TK-Kanäle, insbesondere zur Detektion von Modem- oder Faxsignalen vorgesehen sein, die eine automatische Abschaltung der Echo-Unterdrückungsfunktion ermöglicht, wie dies in den Spezifikationen G.165 von ITU-5 gefordert ist.

## Patentansprüche

1. Compander-Schaltung (20) zur Echounterdrückung in Telekommunikations(TK)-Einrichtungen, wie Endgeräten, Übertragungssystemen oder Vermittlungseinrichtungen, mit einem Eingang ^{x}1',an dem ein von einem nahen TK-Teilnehmer 1 zu einem fernen TK-Teilnehmer 2 ausgesendetes Sendesignal anliegt, einem Eingang ^{x}2^{'}, an dem ein vom fernen TK-Teilnehmer 2 kommendes Empfangssignal zᵢₙ(k) sowie ein ggf. aus mehreren Teilechos bestehendes fernes Echo anliegen, und einem Ausgang y₁', an dem das in der Compander-Schaltung (20) bearbeitete Empfangssignal zₒᵤₜ(k) zum nahen TK-Teilnehmer 1 weitergereicht wird, mit einer Estimator-Schaltung (21) zum Abschätzen einer Echokopplung eines Leitungsechos und seiner Verzögerungszeit, sowie mit einer Kennlinien-Schaltung (23) mit einem Multiplizierglied (24) zur Steuerung des kurzzeitigen Ausgangssignals von zₒᵤₜ(k) in Abhängigkeit vom kurzzeitigen Eingangssignal ^{Z}in(^{k}).
**dadurch gekennzeichnet**,
daß an allen Ein- und Ausgängen der Compander-Schaltung (20) eine Vielzahl von N TK-Kanälen mit N-facher Taktgeschwindigkeit gegenüber einem einzelnen TK-Kanal anliegt bzw. ausgegeben wird;
daß sämtliche Speichereinheiten innerhalb der Compander-Schaltung (20) als Multiplexer-Zwischenspeicher-Demultiplexer (MZD)-Einheiten (30) ausgeführt sind;
und daß ein modulo-N-Zähler (26) vorgesehen ist, der alle MZD-Einheiten (30) so ansteuert, daß in jeder MZD-Einheit (30) immer die gleiche, einem bestimmten TK-Kanal zugeordnete Speicherzelle (35₁, 35₂, 35_{N}) adressiert wird.

2. Compander-Schaltung nach Anspruch 1, dadurch gekennzeichnet, daß die Schaltung auf einem ASIC (Application Specific Integrated Circuit) implementiert ist.

3. Compander-Schaltung nach Anspruch 2, dadurch gekennzeichnet, daß die MZD-Einheiten (30) auf einer externen, vom ASIC getrennten Speichereinheit, vorzugsweise einem RAM (Random Access Memory) realisiert sind.

4. Compander-Schaltung nach Anspruch 2 oder 3, dadurch gekennzeichnet, daß ein digitaler Signalprozessor (DSP) vorgesehen ist, der nach Bedarf in der Kennlinien-Schaltung (23) auf dem ASIC verschiedene Kennlinientypen ein-oder ausschalten kann und/oder Funktionen der Estimator-Schaltung (21) und/oder der Kennlinien-Schaltung (23) übernimmt oder adaptiv steuert.

5. Compander-Schaltung nach einem der vorhergehenden Ansprüche, dadurch gekennzeichnet, daß zusätzlich eine Schaltung mit adaptiven FIR (Finite Impulse Response)-Filtern, die das Gesamtecho nachbilden und von dem an die jeweilige TK-Einrichtung übertragenen Nutzsignal abziehen können, vorgesehen ist.

6. Compander-Schaltung nach Anspruch 5, dadurch gekennzeichnet, daß die adaptiven FIR-Filter auf einem ASIC, vorzugsweise auf dem gleichen ASIC wie die Compander-Schaltung (20), implementiert sind.

7. Compander-Schaltung nach Anspruch 5, dadurch gekennzeichnet, daß die adaptiven FIR-Filter und/oder die Compander-Schaltung (20) durch ein Computerprogramm realisiert sind, das die nachzubildenden Echos in Echtzeit berechnen und vom Nutzsignal auf dem jeweiligen TK-Kanal abziehen kann.

8. Compander-Schaltung nach einem der vorhergehenden Ansprüche, dadurch gekennzeichnet, daß zusätzlich eine Einrichtung zur Erkennung von Nicht-Sprachsignalen auf einem TK-Kanal, insbesondere zur Detektion von Modem-oder Faxsignalen vorgesehen ist.

9. Compander-Schaltung nach Anspruch 8, dadurch gekennzeichnet, daß sämtliche Speichereinheiten der Einrichtung zur Erkennung von Nicht-Sprachsignalen ebenfalls als MZD-Einheiten (30) ausgeführt sind.

10. Compander-Schaltung nach einem der vorhergehenden Ansprüche, dadurch gekennzeichnet, daß die Speicherzellen (35₁, 35₂, .... 35_{N}) eines Speicherelements in einer MZD-Einheit (30) je einen Abtastwert, beispielsweise je Abtastwert 16 bit, speichern und als Basiselemente sogenannte Master-Slave-Flipflops zur Zwischenspeicherung je eines binären Werts enthalten.
